# EUROPEAN PATENT SPECIFICATION

(11) **EP 0 389 181 B1**
(45) Date of publication and mention of the grant of the patent: **17.07.1996**
(21) Application number: 90302763.9
(22) Date of filing: 15.03.1990
(51) Int. Cl.: H04L 29/10

(54) **Apparatus for detecting the configuration of a communication port**
Vorrichtung zur Erkennung der Konfiguration eines Kommunikationsports
Appareil pour détecter la configuration d'une porte de commutation

(30) Priority: 21.03.1989 US 326282
(43) Date of publication of application: 26.09.1990
(73) Proprietor: MINNESOTA MINING AND MANUFACTURING COMPANY, St. Paul, Minnesota 55133-3427 (US)
(72) Inventor: Griffin, Michael E., Minnesota Mining and, St. Paul, Minnesota 55133-3427 (US); Yungers, Christopher R., Minnesota Mining and, St. Paul, Minnesota 55133-3427 (US)
(74) Representative: Molyneaux, Martyn William

(56) References cited:
- EP-A- 0 214 915
- US-A- 4 516 202
- US-A- 4 554 662
- ELECTRO/81 CONFERENCE RECORD, vol. 6, 7th - 9th April 1981, pages 1-10, New York, US; D. FOLKES: "Serial network simplifies the design of multiple microcomputer systems"

## Description

The present invention relates to data communications and more particularly to a system for configuring a data communications channel to permit such communications between two devices.

### Background of the Invention

Many standards exist in the field of data communications. There are, for example, many software standards, or protocols, for encoding and transmitting the data. Some of these standards provide the ability of discovering or even correcting transmission errors.

Before the question of such software standards can even be reached, however, choices must be made among a myriad of hardware standards. Such hardware standards may provide for "parallel" data transmission in which a plurality of data bits are transmitted simultaneously. Usually a parallel data communications channel will provide for the transmission of eight data bits at a time, corresponding to an eight-bit byte. There is nothing that inherently restricts such parallel communications to eight-bit data channels, however, and any convenient number of bits may be transmitted simultaneously.

Alternatively a data channel may be a serial data channel in which a single data bit is transmitted at a time. The data bits are then accumulated by the receiver and assembled into the desired groupings, again typically, although not necessarily, eight-bit bytes.

In addition to the data being transmitted most data communication channels, both parallel and serial, will include a number of control signals. These control signals will allow the ports communicating with one another to properly utilize the communications channel to insure that information is correctly transmitted and received.

Perhaps the best known standard for a serial communication channel is the RS232C. The RS232C standard specifies uses for each of 25 signal lines connecting two electronic systems that are to communicate with one another. Of these 25 lines, two are for data transmission, one in each direction, and the others are used either to match electrical ground potentials between the two systems or to provide control signals.

The RS232C standard is defined for communications between two different types of devices. These are known as data terminal equipment-type devices (DTE) and data communication equipment-type devices (DCE). At times, however, it is desirable to use an RS232C channel to cause two devices, each of which is configured as a DTE, to communication with one another. Additionally, although it makes little sense in terms of the definitions in the standard, in the real world it is sometimes desirable to connect two DCE devices for communication with one another. Furthermore, even within the definitions of DTE and DCE, there is some room for variation from one system to another. As a result, the exact configuration of the devices to be connected must be known in advance and special cables and/or jumpers provided in order to permit communication between the devices.

Electro-81 Conference Record, Vol. 8, No. 7 - 9, April 1981, discloses a half duplex serial network and, in particular, two plural slave devices acting in conjunction with a host computer, each slave being serially addressable from the host and performing operations upon being addressed by the host.

### Summary of the Invention

An Apparatus for determining the configuration of an electrical communication port, as claimed in claim 1 or 2 herein.

The present invention provides circuitry for automatically detecting the configuration of a communication port. According to one embodiment a difference register is reset to a first digital value and a latch stores the digital state of a signal line of the communication port during an initial time period. A comparison means compares the digital state stored in the latch with the digital state of the same line during subsequent time periods. If the digital state of the line changes, a second digital value, differing from the first digital value, is stored in the difference register to indicate that the line so monitored is an output for the communication port.

According to a second embodiment of the invention an electronic driver circuit attempts to drive a line of the communication port to a selected one of the digital states. A comparison means determines whether the driver has forced the line to the selected one of the digital states, and if not, stores the second digital value in the difference register.

### Brief Description of the Drawings

Figure 1 is an electrical schematic diagram of a first circuit according to the invention;
Figure 2 is an electrical schematic diagram of a second circuit according to the invention;
Figure 3 is an electrical schematic diagram of an alternative embodiment of the second circuit according to the invention; and
Figure 4 is an electrical schematic, diagram of digital filter for use with the invention.

### Detailed Description of the Preferred Embodiment

The present invention will be described in terms of a data communication system comprising a local communication port and a distant communication port. Each of the ports is capable of transmitting and receiving information on a plurality of parallel information channels. It will be understood, however, that the communication ports need not be parallel ports in the traditional sense of that term. For the purposes hereof, communication ports capable of transmitting and receiving parallel information will also include traditional serial communication ports where two parallel channels are used to transmit data, one for each direction of transmission or where data is transmitted on one or more channels parallel to control signals on other channels.

In the present invention the requirement of having advance knowledge of the configuration of a communication port is eliminated by providing a circuit that senses that configuration. After the configuration has been determined, information concerning it is stored in a register and is transmitted to a similar circuit connected to a distant communication port. A similar circuit at the distant communication port senses the configuration of its associated port and stores information concerning that configuration and transmits it back to the original circuit. Both of the circuits then determine whether a valid connection is possible between the two ports and automatically configure themselves for communication.

The present invention provides circuitry for determining if information channels in a communication port to which it is connected are intended to be inputs or outputs. Two strategies for making such a determination are employed. The first is to monitor an information channel in the communication port to determine whether the electrical potential is changing between digital states. If it is, the port is driving the channel and it is an output for that port.

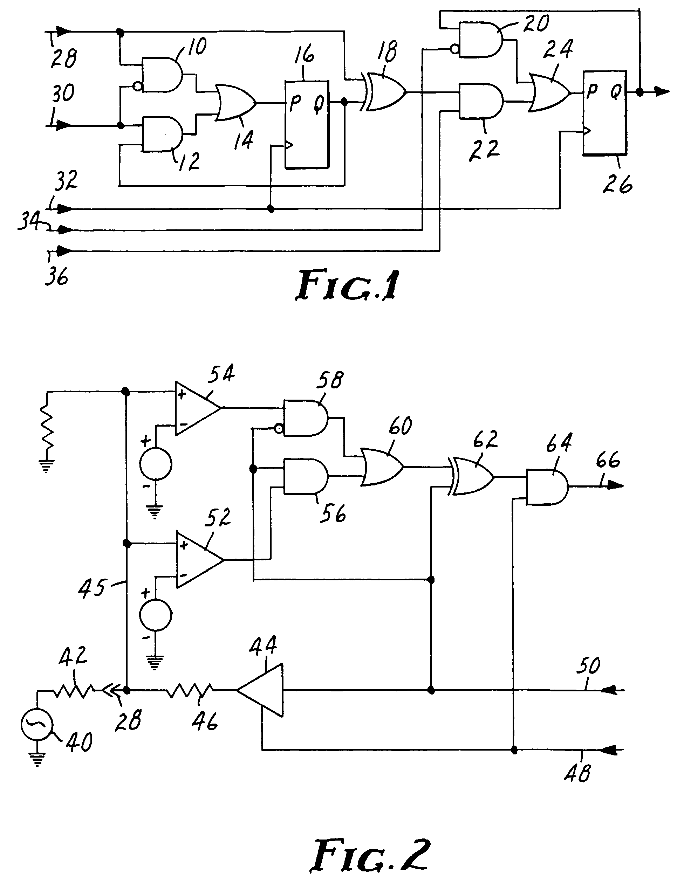

Figure 1 illustrates a circuit for so monitoring an information channel. The circuit of Figure 1 includes an input register comprising AND gates 10 and 12, OR gate 14 and D-Type flip-flop 16 and a difference generator and register comprising EXCLUSIVE-OR gate 18, AND gates 20 and 22, OR gate 24 and D-Type flip-flop 26.

There are five input signals to the circuit of Figure 1. These signals are the data signal received from the communication port and applied to line 28, a Hold-Not Hold signal applied to line 30, a system clock signal applied to line 32, a reset signal applied to line 34 and a test signal applied to line 36.

Initially during the test sequence the Hold-Not Hold signal on line 30 and the test signal on line 36 are held low while the reset signal on line 34 is held high.

Since line 30 is in a low state the output AND gate 12 will be low while the output of AND gate 10, and thus OR gate 14 will follow the data input signal on line 28. Thus at the first clock pulse on line 32 the value of the current data signal on line 28 will be stored in flip-flop 16.

At the same time, since the reset signal on line 34 is held high and the test signal on line 36 is held low, both AND gate 20 and AND gate 22, and as a consequence OR gate 24, will have low output signals. Thus on the same first clock cycle a low value will be stored in flip-flop 26.

After the system clock signal on line 32 has been cycled causing the initial values to be stored in flip-flop 16 and 26 as described above, the Hold-Not Hold, reset and test signals are all inverted. Because the Hold-Not Hold signal on line 30 will then be at a high value, AND gate 10 will have a low input and thus will have a low output regardless of the value of the data signal on line 28. Conversely AND gate 12 will receive a high input signal from line 30. Thus the output of AND gate 12 will be high if the output of flip-flop 16 is high or low if the output of flip-flop 16 is low. OR gate 14 will thus receive a low signal from AND gate 10 and either a high or low signal from AND gate 12, the value of the signal from AND gate 12 being the same as the output of flip-flop 16. Thus the output of OR gate 14 will be the same as the output of flip-flop 16. This results in the value in flip-flop 16 remaining unchanged when Hold-Not Hold signal on line 30 is high.

Since the output of flip-flop 16 is latched at the value of the data signal during the first time period, EXCLUSIVE-OR gate 18 will always receive one input signal equal to that initial data value during the test. The other input to EXCLUSIVE-OR gate 18 will be equal to the subsequent data signals during the test. As a result, the output of EXCLUSIVE-OR gate 18 will be equal to zero at any time that the data signal is the same as the initial data signal latched in flip-flop 16 and will be high if the data signal differs from the initial value.

Because the reset signal on line 34 is low, AND gate 20 will receive one high input. The other input to AND gate 20 is the output signal from flip-flop 26. Since flip-flop 26 was reset to a low output value, this signal will initially be low. Therefore, the output of AND gate will initially be low. The test signal on line 36 is high, giving AND gate 22 a high input. Therefore, the output signal from AND gate 22 will equal the output signal from EXCLUSIVE-OR gate 18. Thus, AND gate 22 will have a high output if a difference between the initial data signal latched in flip-flop 16 and a subsequent data signal on line 28 is detected and low otherwise. If such a difference is detected, OR gate 24 will receive a high input signal and will be then provide a high output signal. On the next cycle of the clock signal on line 32 that high signal will be latched into flip-flop 26. Thereafter, the output of flip-flop 26 will be high. That high signal will be fed back to AND gate 20, which thereafter will have two high signals, insuring that OR gate 24 will always receive at least one high input signal. Thus, the output of flip-flop 26 will be guaranteed to remain high until the system is reset to begin the detection process again.

If the output signal from flip-flop 26 is high, the signal on data input line 28 has changed digital states. For this to be true, data input line 28 must be connected to an output line on the communication port to which the circuit is attached. Since the line is known to be an output, the self-configuration circuitry may proceed with the configuration process. If the output signal from flip-flop 26 is low, however, there is no assurance that the line of the port to which data in line 28 of the present circuit is connected is an input line. The possibility remains that it could be an output line that has not changed digital states during the time of the test.

If the test of the circuit of Figure 1 is unable to conclusively determine that line 28 is connected to an output of the communication port to which the circuit is connected, a different test strategy may be employed. A circuit for the alternative test strategy is provided in Figure 2. The strategy of the circuit of Figure 2 is based on a difference between an output line and an input line in a communications port.

If a particular line is an output line, it will have connected to it a driver intended to hold the line at a particular voltage indicative of the current logic state. If, however, the line of the port to which line 28 is connected is an input, the circuitry in the port will be intended to follow the voltage imposed by an outside source. The strategy of the circuit of Figure 2, thus, is to attempt to drive line 28 alternately to the high and low voltage states and monitor what its voltage is. Driver 44 and resistor 46 are chosen such that they will easily drive line 28 to the desired voltage if line 28 is connected to an input of the port, but will be overcome by the effect of a typical driver in an output line of a communications port. Thus if line 28 is at a high voltage level while driver 44 is attempting to drive it to the low voltage level or if line 28 is at the low voltage level while driver 44 is attempting to drive it to the high voltage level, then line 28 is connected to an output of the communications port. If, alternatively, line 28 consistently follows the output level of driver 44, line 28 is connected to an input line of the communications port.

When the circuit of Figure 2 is not to be used, the test signal on line 48 is put into the low logic state. That causes driver 44 to go into high impedance mode, effectively causing the signal on line 50 to have no effect on the circuit. Since the test signal on line 48 is also coupled to one input of AND gate 64 causing the signal on line 48 to be low will insure that the output of the circuit of Figure 2 on line 66 will be low.

When the circuit of Figure 2 is to be used to test a signal line, the test signal on line 48 is set high and the signal on line 50 is alternately cycled between the low and high levels. The output of driver 44 will follow the signal on line 50. Thus when the signal on line 50 is low, the output of driver 44 will be low. As explained previously the circuit is intended then to determine whether driver 40 is driving line 45 to a high voltage level when driver 44 is attempting to drive it to a low voltage level.

This discussion will assume that line 50 is initially set to the system low voltage level and subsequently cycled to the system high voltage level, although there is no particular preference for this sequence over its reverse. Since line 50 is at a low voltage level and is connected to one input of AND gate 56 the output of AND gate 56 is guaranteed to be low. Since the signal on line 50 is connected through an inverter to one input of AND gate 58 the output of AND gate 58 will follow the output of voltage comparator 54.

Voltage comparator 54 has its minus input connected to a voltage source providing the high signal threshold voltage, i.e., the voltage level above which a signal will be interpreted as being at the system high voltage level. If the signal on line 45 is above the high level threshold voltage, the output of AND gate 54 will be high. If that is the case the output of AND gate 58 will be high as will be the output of OR gate 60. EXCLUSIVE-OR gate 62 has one input connected to line 50 and one input connected to the output of line 60. If line 45 is driven to a high state while a low logic signal is on line 50, EXCLUSIVE-OR gate 62 will have one high and one low signal and will have a high level output. Therefore the output of AND gate 64 on line 66 will be high. This high value may then be stored in flip-flop 26 in Figure 1, or in another register, to indicate that the signal line to which the circuit is connected is an output line of the associated communication port.

If the signal on line 45 is low when the signal on line 50 is low, the voltage provided to the plus input of voltage comparator 54 will be below the threshold voltage applied to the minus input and the output of voltage comparator 54 will be low. This will cause the outputs of AND gate 58 and OR gate 60 to be low causing EXCLUSIVE-OR gate 62 to receive two low signals. Thus the output of OR gate 62 will be low as will the output of AND gate 64 causing the circuit of Figure 2 to have a low output on line 66. In this situation, the line of the communication port associated with the circuit has not been shown to be an output line, but cannot be assumed to be an input line either.

If the line of the communications port to which the circuit is connected has not been determined to be an output line when the signal on line 50 is low, line 45 is again monitored when the signal on line 50 goes to the high logic state. When the signal on line 50 goes to the high logic state AND gate 58 will receive at least one low input signal and so will have an output in the low logic state. AND gate 56, however, will receive at least one high level input signal, so its output will follow the signal that it receives from voltage comparator 52.

Voltage comparator 52 has applied to its minus input a signal at the low level voltage threshold. If the signal on line 45 has followed the signal on line 50 and thus is at the system high voltage level, the voltage applied to the plus input of voltage comparator 52 will be above the low level voltage threshold and the output of voltage comparator 52 will be at the high voltage level. As a result the output signal from AND gate 56, and as a result the output signal from OR gate 60, will be at the high voltage level. Thus EXCLUSIVE-OR gate 62 receives two high level input signals, one from line 50 and one from OR gate 60. This causes the output signal from EXCLUSIVE-OR gate 62 to be at the low voltage level. Thus AND gate 64 receives one low level input signal and one high level input signal and provides a high level output signal on line 66. This is what is to be expected because line 45 has followed the input signal on line 50. If, however, line 45 stays at the system low voltage level when line 50 goes to to the high voltage level, voltage comparator 52, AND gate 56 and OR gate 60 will each provide a low voltage output signal. Thus EXCLUSIVE-OR gate 62 will receive one low level input signal and one high level input signal and will provide a high level output signal to AND gate 64. AND gate 64, therefor, receives two high level output signals and provides a high level output signal on line 66 indicating that the line to which the circuit is connected is an output line of the associated communication port.

This test is continued while the signal on line 50 is cycled a number of times. If the line of the associated communication port is ever determined to be an output, the test may be deemed completed. If after a predetermined number of cycles it has not been found to be an output, the fact that the voltages on line 45 have consistently followed the voltages applied to line 50, indicates that the line of the associated communication port is an input.

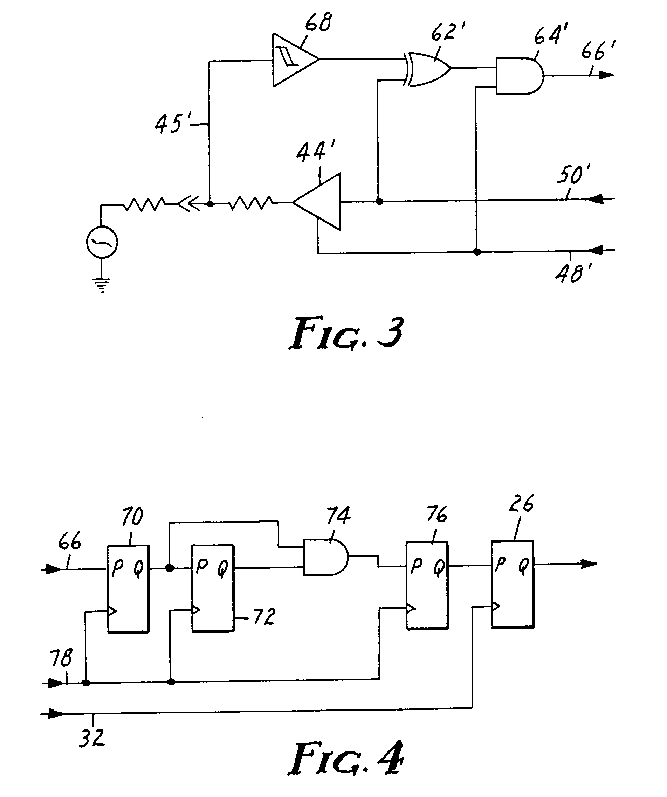

Figure 3 shows an alternative circuit that may be used in place of the circuit of Figure 2. In the circuit of Figure 3 tri-state driver 44′ acts in a manner comparable to tri-state driver 44 of Figure 2. When the test is enable by applying a high voltage level to line 48′, tri-state driver 44′ will attempt to drive line 45′ to alternately high and low voltage levels following the signal applied to line 50′. Schmitt trigger 68 is chosen such that a system high voltage level applied to its input will drive it to its high output state while a system low voltage level applied to its input will drive it to its low voltage output state. EXCLUSIVE-OR gate 62′ then simply compares the output of Schmitt trigger 68 with the signal applied to line 50′. If they are the same, EXCLUSIVE-OR gate 62′ will provide a low output signal. If they are different, however, EXCLUSIVE-OR gate 62′ will provide a high level output. As long as the test is enabled AND gate 64′ will provide an output equal to the output signal from EXCLUSIVE-OR gate 62′. Thus at any time that the signal on line 45′ and that on 50′ are different, a high level output signal will be provided on line 66′.

Both of the circuits shown in Figures 2 and 3 will provide transients when the signal on line 50 or 50′ change. Figure 4 shows an additional circuit that will overcome errors that may result from the transients. In the circuit of Figure 4 flip-flop 70, 72, and 76, and AND gate 74 provide a filter to ensure that the high output on line 66 or 66′ of Figures 2 and 3, respectively, is maintained for a sufficient length of time to ensure that the high output is actually indicative of a determination that the line of the associated communication port is in fact an output line. A filter clock signal is provided on line 78. The filter clock signal on line 78 is preferably at a lower frequency than the system clock signal on line 32. The input of flip-flop 70 receives the signal from line 66 or 66′. The value of that signal is latched in flip-flop 70 when the filter clock is cycled. That value is then provided to the input of flip-flop 72 and latched there on the next cycle of the filter clock. The output of both flip-flop 70 and 72 are then combined by AND gate 74. Therefore AND gate 74 will only provide a high level output if line 66 or 66′ provide a high level output for at least two periods of the filter clock on line 78. If this occurs the high level signal on line 66 is not likely to have been caused by a transient and the value is stored in flip-flop 76. Flip-flop 76 in turn provides it to flip-flop 26, from which the remaining circuitry can determine that the circuit is connected to an output line of the associated communication port.

## Claims

1. Apparatus for determining the configuration of an electrical communication port, where said port comprises a plurality of data lines, each of said lines being capable of assuming either of two digital states, said apparatus comprising:
difference register (26) for storing information about said configuration;
reset means for forcing said difference register into a first of said digital states;
latching means (16) for storing the digital state of one of said lines during a first time period; and
comparison means (18) for comparing said digital state stored in said latching means (16) with the digital state of said line during a subsequent time period, said comparison means causing said difference register (26) to change to a second digital state if said digital state stored by said latching means and said digital state of said line during a subsequent time are different, said second digital state differing from said first digital state.

2. Apparatus for determining the configuration of an electrical communication port, where said port comprises a plurality of data lines, each of said lines being capable of assuming either of two digital states, said apparatus comprising:
difference register (26) for storing information about said configuration;
reset means for forcing said difference register into a first of said digital states;
driver means (44, 44') for attempting to force a preselected one of said lines to one of said digital states;
comparison means (54,68) for comparing the digital state of said preselected line with said one of said digital states, said comparison means (54,68) causing said difference register (26) to change to a second digital state if said digital state of said preselected line and said one of said digital states are different.

## Patentansprüche

1. Vorrichtung zur Bestimmung der Konfiguration eines elektrischen Kommunikationsports, wobei der genannte Port eine Mehrzahl von Datenleitungen umfaßt, wobei jede der genannten Leitungen einen von zwei digitalen Zuständen annehmen kann, wobei die genannte Vorrichtung folgendes umfaßt:
ein Differenzregister (26) zum Speichern von Informationen in bezug auf die genannte Konfiguration;
eine Rücksetzeinrichtung, die das genannte Differenzregister in einen ersten der genannten digitalen Zustände vesetzt;
eine Haltespeichereinrichtung (16) zum Speichern des digitalen Zustands einer der genannten Leitungen während einem ersten Zeitraum; und
eine Vergleichseinrichtung (18) zum Vergleichen des in der genannten Haltespeichereinrichtung (16) gespeicherten digitalen Zustands mit dem digitalen Zustand der genannten Leitung während einem späteren Zeitraum, wobei die genannte Vergleichseinrichtung einen Wechsel des genannten Differenzregisters (26) in einen zweiten digitalen Zustand bewirkt, wenn der von der genannten Haltespeichereinrichtung gespeicherte digitale Zustand und der genannte digitale Zustand der genannten Leitung während einem späteren Zeitraum unterschiedlich sind, wobei sich der genannte zweite digitale Zustand von dem genannten ersten digitalen Zustand unterscheidet.

2. Vorrichtung zur Bestimmung der Konfiguration eines elektrischen Kommunikationsports, wobei der genannte Port eine Mehrzahl von Datenleitungen umfaßt, wobei jede der genannten Leitungen einen von zwei digitalen Zuständen annehmen kann, wobei die genannte Vorrichtung folgendes umfaßt:
ein Differenzregister (26) zum Speichern von Informationen in bezug auf die genannte Konfiguration;
eine Rücksetzeinrichtung, die das genannte Differenzregister in einen ersten der genannten digitalen Zustände vesetzt;
eine Steuereinrichtung (44, 44'), die versucht eine ausgewählte Leitung der genannten Leitungen in einen der genannten digitalen Zustände zu versetzen;
eine Vergleichseinrichtung (54, 68) zum Vergleichen des digitalen Zustands der genannten ausgewählten Leitung mit dem genannten einen digitalen Zustand, wobei die genannte Vergleichseinrichtung (54, 68) einen Wechsel des genannten Differenzregisters (26) in einen zweiten digitalen Zustand bewirkt, wenn der genannte digitale Zustand der genannten ausgewählten Leitung und der genannte eine digitale Zustand unterschiedlich sind.

## Revendications

1. Dispositif permettant de déterminer la configuration d'un port de communication électrique, dans lequel le port comprend de multiples lignes de données, chacune desdites lignes étant susceptibles d'occuper l'un ou l'autre de deux états numériques, le dispositif comprenant :
un registre de différence (26) servant à ranger en mémoire l'information concernant ladite configuration,
des moyens de remise à l'état initial servant à forcer le registre de différence à un premier desdits états numériques,
des moyens de blocage (16) servant à ranger en mémoire l'état numérique de l'une desdites lignes pendant une première période de temps et
des moyens de comparaison (18) servant à comparer l'état numérique rangé en mémoire dans les moyens de blocage (16) à l'état numérique de ladite ligne pendant une période de temps suivante, les moyens de comparaison provoquant un passage du registre de différence (26) à un second état numérique si l'état numérique rangé en mémoire par les moyens de blocage et l'état numérique de ladite ligne pendant une période de temps suivante sont différents, le second état numérique étant différant du premier état numérique.

2. Dispositif permettant de déterminer la configuration d'un port de communication électrique, dans lequel le port comprend de multiples lignes de données, chacune desdites lignes étant susceptibles d'occuper l'un ou l'autre de deux états numériques, le dispositif comprenant :
un registre de différence (26) servant à ranger en mémoire l'information concernant ladite configuration,
des moyens de remise à l'état initial servant à forcer le registre de différence à un premier desdits états numériques,
des moyens d'excitation (44, 44') servant à tenter de forcer l'une, présélectionnée, desdites lignes à un premier desdits états numériques,
des moyens de comparaison (54, 68) servant à comparer l'état numérique de la ligne présélectionnée audit premier des états numériques, les moyens de comparaison (54, 68) provoquant un passage du registre de différence (26) à un second état numérique si ledit état numérique de la ligne présélectionnée et ledit premier des états numériques sont différents.
